# EUROPEAN PATENT SPECIFICATION

(11) **EP 3 754 453 B1**
(45) Date of publication and mention of the grant of the patent: **27.12.2023**
(21) Application number: 18910968.9
(22) Date of filing: 27.08.2018
(51) Int. Cl.: G05D 23/00, G05D 23/20

(54) **TEMPERATURE CONTROL METHOD AND APPARATUS FOR COOKWARE, AND COOKWARE AND STORAGE MEDIUM**
TEMPERATURREGELUNGSVERFAHREN UND -VORRICHTUNG FÜR KOCHGESCHIRR UND KOCHGESCHIRR UND SPEICHERMEDIUM
PROCÉDÉ ET APPAREIL DE RÉGULATION DE TEMPÉRATURE POUR USTENSILE DE CUISINE, AINSI QU'USTENSILE DE CUISINE ET SUPPORT DE STOCKAGE

(30) Priority: 22.03.2018 CN 201810242383
(43) Date of publication of application: 23.12.2020
(73) Proprietor: Foshan Shunde Midea Electrical Heating Appliances Manufacturing Co., Limited, Foshan, Guangdong 528311 (CN)
(72) Inventor: XU, Zhibo, Foshan, Guangdong 528311 (CN); XING, Fenglei, Foshan, Guangdong 528311 (CN); CHEN, Weiwei, Foshan, Guangdong 528311 (CN); BI, Peng, Foshan, Guangdong 528311 (CN); LIN, Xiubao, Foshan, Guangdong 528311 (CN); SHAN, Maozhen, Foshan, Guangdong 528311 (CN)
(74) Representative: RGTH
(86) International application number: PCT/CN2018/102488
(87) International publication number: WO 2019/179038

(56) References cited:
- CN-A- 101 751 055
- CN-A- 101 751 055
- CN-A- 105 942 880
- CN-A- 107 660 995
- JP-A- H09 145 060
- JP-A- H10 141 669
- JP-A- H11 182 851
- JP-A- 2009 259 740
- JP-A- 2017 107 882
- JP-A- 2017 139 127

## Description

### TECHNICAL FIELD

The present application relates to the technology of temperature control, and in particular to a temperature control method and a temperature control apparatus for a cookware, a cookware and a storage medium.

### BACKGROUND

Temperature sensors of most existing baking machine are disposed at the center position of the baking tray, and the temperature sensors directly detect the temperature of the center of the baking tray. After preheating, a food is placed on the baking tray for cooking. When the food is just placed in a central region of the baking tray, since the food itself has a relatively low temperature, the food would absorb quickly the heat from the central region of the baking tray, thereby reducing the temperature of the central region of the baking tray. When the temperature sensors detect that the temperature of the baking tray has been reduced to the lowest temperature threshold value, a heating device is started to work, so that the working temperature of the baking tray is in a normal working range, so as to ensure the cooking effect of the food. However, when the food is placed on an edge region of the baking tray, the food would absorb the heat from the edge region of the baking tray, which has a little effect on the temperature of the center region of the baking tray in a short period of time, and thus the temperature sensors in the center region of the baking tray cannot detect the temperature reduction of the baking tray in time. Accordingly, the operation of the heating device cannot be controlled in time, so that the baking tray cannot provide a reliable cooking temperature for the food.

JP 2017107882 A discloses an induction heating cooker that can avoid the problem that if a gap is generated between a top plate and a pot bottom by warpage of the pot bottom or the like, the gap highly influences a thermal binding state between a pot and a thermistor.

JPH 11182851 A discloses a heating device safe and ease in operation which stops heating when abnormality occurs to a temperature detecting means, in a heating device to effect automatic cooking while food temperature is being detected.

JPH 10141669 A discloses a control method for thawing, which is not necessitating the detecting accuracy of a temperature detector and capable of thawing an object even when the amount of an object is small.

JPH 09145060 A temperature measuring device that enables to cook a material to be cooked at a desired temperature by providing a material-to-be-cooked temperature estimating unit for estimating the temperature of the material when the material has a small size and its temperature is scarcely detected.

JP 2009 259740 A discloses an induction heat cooking system having pan bottom sensors that are fixed on a bottom plate of a pan. These pan bottom sensors are arranged on a common circular trajectory and detect a temperature of the pan at a plurality of locations of the bottom plate.

### SUMMARY

The embodiments of the present application are expected to provide a temperature control method and a temperature control apparatus for a cookware, a cookware and a storage medium, to improve the flexibility of temperature control and improve the intelligent level of the cookware.

The technical solutions of the present application are implemented as follows.

The embodiments of the present application provide a temperature control method for a cookware, the cookware including a first heating device and a plurality of temperature sensors arranged at different positions of a first heating area; the method including the following steps:
temperature values detected by the plurality of temperature sensors are collected;
a minimum temperature value and a maximum temperature value of the first heating area are determined from all the collected temperature values;
the first heating device is started if the minimum temperature value and the maximum temperature value of the first heating area satisfy a preset temperature increase condition; and
the first heating device is stopped if the minimum temperature value and the maximum temperature value of the first heating area satisfy a preset temperature reduction condition.

The cookware further includes: a second heating device to an N^{th} heating device, and a plurality of temperature sensors arranged at different positions of an i^{th} heating area. The i^{th} heating area corresponds to an i^{th} heating device, in which i is an integer of 2 to N. The method further includes the following steps: temperature values detected by the plurality of temperature sensors in the i^{th} heating area are collected; a minimum temperature value and a maximum temperature value of the i^{th} heating area are determined from all the collected temperature values; the i^{th} heating device is started if the minimum temperature value and the maximum temperature value of the i^{th} heating area satisfy the preset temperature increase condition; and the i^{th} heating device is stopped if the minimum temperature value and the maximum temperature value of the i^{th} heating area satisfy the preset temperature reduction condition, wherein the starting and stopping of the plurality of heating devices is controlled independently.

The temperature increase condition includes: the minimum temperature value being less than a lowest temperature threshold value, and the maximum temperature value being less than a highest temperature threshold value.

The temperature reduction condition includes: the minimum temperature value being greater than or equal to a lowest temperature threshold value, or the maximum temperature value being greater than or equal to a highest temperature threshold value.

The method further includes the following steps: the lowest temperature threshold value and the highest temperature threshold value corresponding to each working mode of each heating area are preset; and the lowest temperature threshold value and the highest temperature threshold value of each heating area in a current working mode are determined.

In the above solution, the method further includes the following steps: the lowest temperature threshold value and the highest temperature threshold value corresponding to each working mode of the cookware are preset; and the lowest temperature threshold value and the highest temperature threshold value of the cookware in a current working mode are determined.

In the above solution, a distribution of the plurality of temperature sensors is a radial distribution or a dot matrix distribution.

The embodiments of the present application further provide a temperature control apparatus for a cookware. The cookware includes a first heating device and a plurality of temperature sensors arranged at different positions of a first heating area. The temperature control apparatus includes a first processor and a first memory.

The first processor is configured to execute temperature control programs stored in the first memory to implement the following steps: temperature values detected by the plurality of temperature sensors are collected; a minimum temperature value and a maximum temperature value of the first heating area are determined from all the collected temperature values; the first heating device is started if the minimum temperature value and the maximum temperature value of the first heating area satisfy a preset temperature increase condition; and the first heating device is stopped if the minimum temperature value and the maximum temperature value of the first heating area satisfy a preset temperature reduction condition.

The embodiments of the present application further provide a cookware. The cookware includes a second processor, a second memory, a first heating device, and a plurality of temperature sensors arranged at different positions of a first heating area. The second processor is configured to execute temperature control programs stored in the second memory to implement the following steps:
temperature values detected by the plurality of temperature sensors are collected;
a minimum temperature value and a maximum temperature value of the first heating area are determined from all the collected temperature values;
the first heating device is started if the minimum temperature value and the maximum temperature value of the first heating area satisfy a preset temperature increase condition; and
the first heating device is stopped if the minimum temperature value and the maximum temperature value of the first heating area satisfy a preset temperature reduction condition.

The embodiments of the present application further provide a computer readable storage medium having computer programs stored thereon, in which steps of the method of any one of the above embodiments are implemented when the computer programs are executed by a processor.

The embodiments of the present application provide a temperature control method and a temperature control apparatus for a cookware, a cookware and a storage medium. The cookware includes a first heating device and a plurality of temperature sensors arranged at different positions of a first heating area. The method includes the following steps: temperature values detected by the plurality of temperature sensors are collected; a minimum temperature value and a maximum temperature value of the first heating area are determined from all the collected temperature values; the first heating device is started if the minimum temperature value and the maximum temperature value of the first heating area satisfy a preset temperature increase condition; and the first heating device is stopped if the minimum temperature value and the maximum temperature value of the first heating area satisfy a preset temperature reduction condition.

By adopting the above technical solutions, the temperature of the heating area can be synthetically judged based on the temperature values detected by the plurality of temperature sensors. The heating device is started if the temperature increase condition is satisfied, so as to increase the temperature of the heating area to ensure the cooking effect of the food. The heating device is stopped if the temperature reduction condition is satisfied, so as to reduce the temperature of the heating area to ensure the safety of the cookware. In this way, the flexibility of temperature control is improved, and the intelligent level of the cookware is improved.

### BRIEF DESCRIPTION OF THE DRAWINGS

FIG. 1 is a flow chart of a first embodiment of a temperature control method for a cookware in embodiments of the present application;
FIG. 2 is a schematic diagram of a structure of a cookware in embodiments of the present application;
FIG. 3 is a flow chart of a second embodiment of a temperature control method for a cookware in embodiments of the present application;
FIG. 4 is a schematic diagram of components of a temperature control apparatus of a cookware in embodiments of the present application;
FIG. 5 is a schematic diagram of components of a cookware in embodiments of the present application.

### DETAILED DESCRIPTION

Hereinafter, the technical solutions in the embodiments of the present application will be described clearly and completely in combination with the accompanying drawings in the embodiments of the present application.

### First embodiment

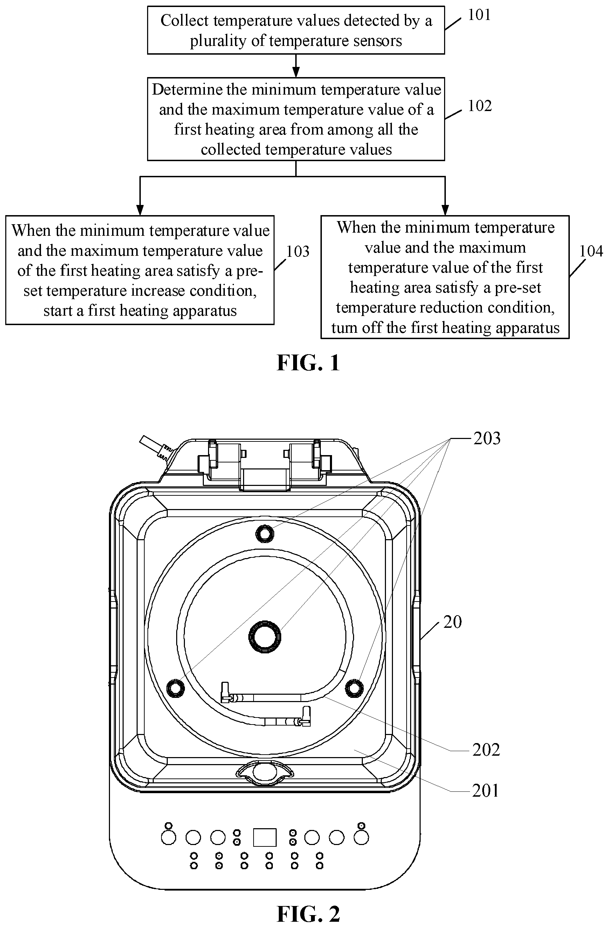

In the first embodiment, a cookware includes a first heating device and a plurality of temperature sensors arranged at different positions of a first heating area. Herein, the first heating device is configured to heat the first heating area, and the cookware may be a home kitchen appliance such as a baking machine, a steak machine, an induction cooker, a rice cooker and the like. FIG. 1 is a flow chart of the first embodiment of a temperature control method for a cookware in embodiments of the present application. As shown in FIG. 1, the method includes the following steps.

In step 101, temperature values detected by the plurality of temperature sensors are collected.

As an example, when the heating area is a baking tray, the food is in contact with an outer surface of the baking tray, and the plurality of temperature sensors are in contact with an inner surface of the baking tray to detect the working temperature of the baking tray.

Specifically, a distribution of the plurality of temperature sensors may be a radial distribution or a dot matrix distribution. The radial distribution includes a center position of the heating area and equally-spaced positions on a circumference of a circle that spreads outward from the center position by at least a radius. The dot matrix distribution includes a plurality of dot matrix positions with an equal row spacing and an equal column spacing.

FIG. 2 is a schematic diagram of structure of a cookware in embodiments of the present application. As shown in FIG.2, the cookware is a baking machine. The baking machine 20 includes: a baking tray 201, a heating device 202 and a plurality of temperature sensors 203, in which the baking tray is the heating area in the embodiments of the present application, and the food is placed on the baking tray to implement the cooking operation. The plurality of temperature sensors 203, which are distributed in a radiation pattern, particularly include: a primary temperature sensor at the center position, and three secondary temperature sensors evenly distributed on a circumference of a circle that spreads outward from the center position by a radius. The primary temperature sensor is configured to detect the temperature at the center of the baking tray, and each of the three secondary temperature sensors is configured to detect the temperature at the edge of the baking tray.

In step 102, a minimum temperature value and a maximum temperature value of the first heating area are determined from all the collected temperature values.

Herein, temperature values of the first heating area include T1, T2 to Tm. A number of m temperature values are compared to determine the minimum temperature value Tmin and the maximum temperature value Tmax. The two values can be used as a basis for controlling the starting and stopping of the first heating device, to improve the reliability of temperature control.

In step 103, the first heating device is started if the minimum temperature value and the maximum temperature value of the first heating area satisfy a preset temperature increase condition.

As an example, the temperature increase condition includes: the minimum temperature value being less than a lowest temperature threshold value, and the maximum temperature value being less than a highest temperature threshold value. Herein, before the first heating device is started, the first heating device is in a stopped state. Therefore, it is necessary to start the first heating device to increase the temperature of the first heating area.

As an example, the first heating device may be an electrical heating tube, a heater with a Positive Temperature Coefficient (PCT) characteristic, or an electrical heating film, etc..

In step 104, the first heating device is stopped if the minimum temperature value and the maximum temperature value of the first heating area satisfy a preset temperature reduction condition.

As an example, the temperature reduction condition includes: the minimum temperature value being greater than or equal to a lowest temperature threshold value, or the maximum temperature value being greater than or equal to a highest temperature threshold value. Herein, before the first heating device is stopped, the first heating device is in a working state. Therefore, it is necessary to stop the first heating device to reduce the temperature of the first heating area.

Optionally, the lowest temperature threshold value may be determined according to the minimum temperature value which guarantees the cooking effect of the food when the cookware is working, and the highest temperature threshold value may be determined according to the maximum temperature value which is allowed when the cookware is working. For example, since there are differences in sensitivities of the sensors and in temperatures of cooking ingredients, the range of the minimum temperature value may be set between 150 °C and 210 °C, preferably 180°C. In order to ensure that the baking machine works safely, a preset protection temperature of the baking tray is set between 250 °C and 300 °C, and the maximum temperature value may be 250 °C.

In another optional embodiment, both the lowest temperature threshold value and the highest temperature threshold value may be determined according to a working mode selected in the cookware. For example, the cookware in a working mode has a corresponding temperature range. An upper limit value of the temperature range is the highest temperature threshold value and a lower limit value of the temperature range is the lowest temperature threshold value. For example, the working modes of the baking machine include: a steak mode, a pancake mode, a fried egg mode and the like. A temperature range corresponding to the steak mode is between 185 °C and 205 °C, in which the highest temperature threshold value is 205 °C, and the lowest temperature threshold value is 185 °C. A temperature range corresponding to the pancake mode is between 180 °C and 200 °C, in which the highest temperature threshold value is 200 °C, and the lowest temperature threshold value is 180 °C. A temperature range corresponding to the fried egg mode is between 170 °C and 190 °C, in which the highest temperature threshold value is 190 °C, and the lowest temperature threshold value is 170 °C.

Thus, the temperature control method in the embodiment of the present application may further includes the following steps: the lowest temperature threshold value and the highest temperature threshold value corresponding to each working mode of the cookware are preset; and the lowest temperature threshold value and the highest temperature threshold value of the cookware in the current working mode are determined.

In an actual implementation, the heating device is started, if Tmin is less than a preset lowest temperature threshold value TL and Tmax is less than a preset highest temperature threshold value TH; or else, the heating device is stopped, if Tmin is greater than or equal to the preset lowest temperature threshold value TL or Tmax is greater than or equal to the highest temperature threshold value TH. During the entire cooking process, cooking programs intermittently read the temperature values of all the temperature sensors, and judge whether to start or stop heating according to the above method until timing of the cooking program is over.

In the embodiments of the present application, step 101 to step 104 may be performed by a processor of the cookware, or performed by a processor of a temperature control apparatus for the cookware. The performing order of step 103 and step 104 as well as whether to perform step 103 and step 104 are not limited by the embodiments of the present application, but are determined based on the collected minimum temperature value and maximum temperature value.

In the embodiments of the present application, the cookware includes a first heating device and a plurality of temperature sensors arranged at different positions of a first heating area. The method includes the following steps: temperature values detected by the plurality of temperature sensors are collected; a minimum temperature value and a maximum temperature value of the first heating area are determined from all the collected temperature values; the first heating device is started if the minimum temperature value and the maximum temperature value of the first heating area satisfy a preset temperature increase condition; and the first heating device is stopped if the minimum temperature value and the maximum temperature value of the first heating area satisfy a preset temperature reduction condition.

By adopting the above technical solutions, the temperature of the heating area can be synthetically judged based on the temperature values detected by the plurality of temperature sensors. The heating device is started if the temperature increase condition is satisfied, so as to increase the temperature of the heating area to ensure the cooking effect of the food. The heating device is stopped if the temperature reduction condition is satisfied, so as to reduce the temperature of the heating area to ensure the safety of the cookware. In this way, the flexibility of temperature control is improved, and the intelligent level of the cookware is improved.

### Second embodiment

In order to better reflect the purpose of the present application, the present application is further exemplified on the basis of the first embodiment of the present application.

In the second embodiment, the cookware includes: a first heating device, a second heating device to an N^{th} heating device, and a plurality of temperature sensors arranged at different positions of an i^{th} heating area. The i^{th} heating area corresponds to an i^{th} heating device, in which i is an integer of 2 to N. The i^{th} heating device is configured to heat the i^{th} heating area. The i^{th} heating device to the N^{th} heating device may be electrical heating tubes, heaters with PCT characteristic, or electrical heating films etc., and may be the same device or different devices.

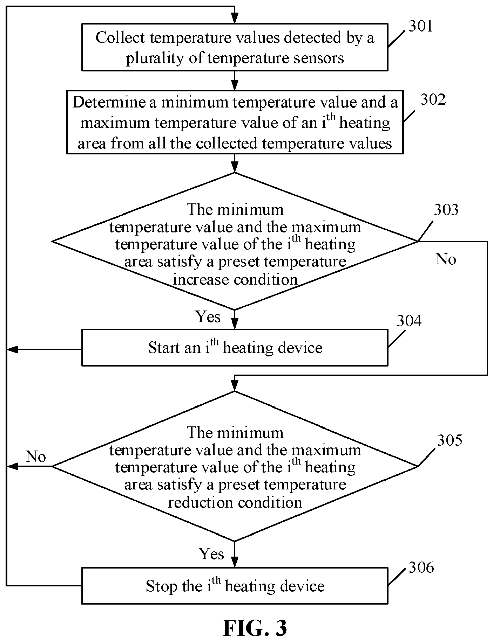

FIG. 3 is a flow chart of the second embodiment of a temperature control method for a cookware in embodiments of the present application. The method includes the following steps.

In step 301, temperature values detected by the plurality of temperature sensors are collected.

Herein, the temperature values detected by all of the temperature sensors on the cookware may be collected at the same time, or the temperature values detected by the temperature sensors in a part of the heating areas may be collected.

In step 302, a minimum temperature value and a maximum temperature value of the i^{th} heating area are determined from all the collected temperature values.

Herein, the minimum temperature values and the maximum temperature values of the first heating area to the N^{th} heating area may be determined successively. The minimum temperature value and the maximum temperature value of each heating area may also be determined at the same time, and the heating device corresponding to each heating area may be controlled according to the determined maximum and minimum temperature values.

In addition, the first heating area to the N^{th} heating area may be set flexibly according to the use of the cookware. For example, an upper baking tray of the baking machine is divided into several heating areas, or a lower baking tray of the baking machine is divided into several heating areas.

In step 303, it is judged whether the minimum temperature value and the maximum temperature value of the i^{th} heating area satisfy the preset temperature increase condition. If it is, step 304 is performed; if it is not, step 305 is performed.

As an example, the temperature increase condition includes: the minimum temperature value of the i^{th} heating area being less than a lowest temperature threshold value, and the maximum temperature value of the i^{th} heating area being less than a highest temperature threshold value.

In step 304, the i^{th} heating device is started.

After step 304 is performed, step 301 is returned, so as to continue to collect temperature values detected by the plurality of temperature sensors at the next time, thereby achieving real-time monitoring of the temperature of the first heating area to the temperature of the N^{th} heating area.

In step 305, it is judged whether the minimum temperature value and the maximum temperature value of the i^{th} heating area satisfy the preset temperature reduction condition. If it is, step 306 is performed; if it is not, step 301 is returned.

As an example, the temperature reduction condition includes: the minimum temperature value of the i^{th} heating area being greater than or equal to the lowest temperature threshold value, or the maximum temperature value of the i^{th} heating area being greater than or equal to the highest temperature threshold value.

In step 306, the i^{th} heating device is stopped.

After step 306 is performed, step 301 is returned, so as to continue to collect temperature values detected by the plurality of temperature sensors at the next time, thereby achieving real-time monitoring of the temperature of the first heating area to the temperature of the N^{th} heating area until the cookware is stopped. Therefore, no matter which heating area the food is placed in, temperature change of the heating area may be detected in time, and heating is controlled according to the temperature change. In addition, the accuracy of temperature control in the heating areas may be improved by controlling independently starting and stopping of the plurality of heating devices.

Optionally, the lowest temperature threshold value and the highest temperature threshold value corresponding to each working mode of each heating area is preset; and the lowest temperature threshold value and the highest temperature threshold value of each heating area in the current working mode are determined.

In the embodiment of the present application, a plurality of temperature sensors are arranged at different positions of the first heating area to the N^{th} heating area, to detect temperature values at different positions. In this way, no matter which one of the heating areas the food or the cooker is placed in, temperature change of the heating area may be detected in time, and starting or stopping of the heating device may be controlled according to the temperature change, so as to ensure that the heating area may provide a uniform temperature and improve the cooking effect.

### Third embodiment

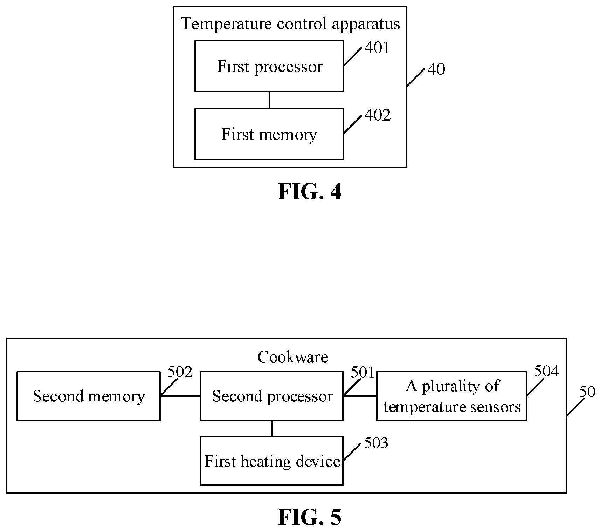

Based on the same inventive concept, the embodiments of the present application further provide a temperature control apparatus for a cookware. The cookware includes a first heating device and a plurality of temperature sensors arranged at different positions of a first heating area. FIG. 4 is a schematic diagram of components of a temperature control apparatus of a cookware in embodiments of the present application. As shown in FIG.4, the temperature control apparatus 40 includes a first processor 401 and a first memory 402.

The first processor 401 is configured to execute temperature control programs stored in the first memory 402 to implement the following steps:
temperature values detected by the plurality of temperature sensors are collected;
a minimum temperature value and a maximum temperature value of the first heating area are determined from all the collected temperature values;
the first heating device is started if the minimum temperature value and the maximum temperature value of the first heating area satisfy a preset temperature increase condition; and
the first heating device is stopped if the minimum temperature value and the maximum temperature value of the first heating area satisfy a preset temperature reduction condition.

In an actual implementation, the temperature increase condition includes: the minimum temperature value being less than a lowest temperature threshold value, and the maximum temperature value being less than a highest temperature threshold value.

In an actual implementation, the temperature reduction condition includes: the minimum temperature value being greater than or equal to a lowest temperature threshold value, or the maximum temperature value being greater than or equal to a highest temperature threshold value.

In an actual implementation, the first processor 401 is configured to execute temperature control programs stored in the first memory 402 to implement the following steps: the lowest temperature threshold value and the highest temperature threshold value corresponding to each working mode of the cookware are preset; and the lowest temperature threshold value and the highest temperature threshold value of the cookware in the current working mode are determined.

In an actual implementation, the cookware further includes: a second heating device to an N^{th} heating device, and a plurality of temperature sensors arranged at different positions of an i^{th} heating area. The i^{th} heating area corresponds to an i^{th} heating device, in which i is an integer of 2 to N. The first processor 401 is also configured to execute temperature control programs stored in the first memory 402 to implement the following steps: temperature values detected by the plurality of temperature sensors in the i^{th} heating area are collected; a minimum temperature value and a maximum temperature value of the i^{th} heating area are determined from all the collected temperature values; the i^{th} heating device is started if the minimum temperature value and the maximum temperature value of the i^{th} heating area satisfy the preset temperature increase condition; and the i^{th} heating device is stopped if the minimum temperature value and the maximum temperature value of the i^{th} heating area satisfy the preset temperature reduction condition.

In an actual implementation, the first processor 401 is also configured to execute temperature control programs stored in the first memory 402 to implement the following steps: the lowest temperature threshold value and the highest temperature threshold value corresponding to each working mode of each heating area are preset; and the lowest temperature threshold value and the highest temperature threshold value of each heating area in the current working mode are determined.

In an actual implementation, a distribution of the plurality of temperature sensors is a radial distribution or a dot matrix distribution.

### Fourth embodiment

Based on the same inventive concept, the embodiments of the present application further provide a cookware. FIG.5 is a schematic diagram of components of a cookware in embodiments of the present application. As shown in FIG.5, the cookware 50 includes: a second processor 501, a second memory 502, a first heating device 503, and a plurality of temperature sensors 504 arranged at different positions of a first heating area.

The second processor 501 is configured to execute temperature control programs stored in the second memory 502 to implement the following steps:
temperature values detected by the plurality of temperature sensors are collected;
a minimum temperature value and a maximum temperature value of the first heating area are determined from all the collected temperature values;
the first heating device is started if the minimum temperature value and the maximum temperature value of the first heating area satisfy a preset temperature increase condition; and
the first heating device is stopped if the minimum temperature value and the maximum temperature value of the first heating area satisfy a preset temperature reduction condition.

In an actual implementation, the temperature increase condition includes: the minimum temperature value being less than a lowest temperature threshold value, and the maximum temperature value being less than a highest temperature threshold value.

In an actual implementation, the temperature reduction condition includes: the minimum temperature value being greater than or equal to the lowest temperature threshold value, or the maximum temperature value being greater than or equal to the highest temperature threshold value.

In an actual implementation, the second processor 501 is also configured to execute temperature control programs stored in the second memory 502 to implement the following steps: the lowest temperature threshold value and the highest temperature threshold value corresponding to each working mode of the cookware are preset; and the lowest temperature threshold value and the highest temperature threshold value of the cookware in the current working mode are determined.

In an actual implementation, the cookware further includes: a second heating device to an N^{th} heating device, and a plurality of temperature sensors arranged at different positions of an i^{th} heating area. The i^{th} heating area corresponds to an i^{th} heating device, in which i is an integer of 2 to N. The second processor 501 is also configured to execute temperature control programs stored in the second memory 502 to implement the following steps: temperature values detected by the plurality of temperature sensors in the i^{th} heating area are collected; a minimum temperature value and a maximum temperature value of the i^{th} heating area are determined from all the collected temperature values; the i^{th} heating device is started if the minimum temperature value and the maximum temperature value of the i^{th} heating area satisfy the preset temperature increase condition; and the i^{th} heating device is stopped if the minimum temperature value and the maximum temperature value of the i^{th} heating area satisfy the preset temperature reduction condition.

In an actual implementation, the second processor 501 is also configured to execute temperature control programs stored in the second memory 502 to implement the following steps: the lowest temperature threshold value and the highest temperature threshold value corresponding to each working mode of each heating area are preset; and the lowest temperature threshold value and the highest temperature threshold value of each heating area in the current working mode are determined.

In an actual implementation, a distribution of the plurality of temperature sensors is a radial distribution or a dot matrix distribution.

In an actual implementation, the above-mentioned first processor 401 and second processor 501 may be at least one of Application Specific Integrated Circuit (ASIC), Digital Signal Processing Device (DSPD), Programmable Logic Device (PLD), Field-Programmable Gate Array (FPGA), Micro Processor Unit (MPU) or Digital Signal Processor (DSP). It may be understood that, for different devices, the electronic elements used to implement the functions of the above-mentioned processors may also be other electronic elements, which are not specifically limited in the embodiments of the present application.

Each of the above-mentioned first memory 402 and second memory 502 may be a volatile memory, such as a Random-Access Memory (RAM); or may be an non-volatile memory, such as a Read-Only Memory (ROM), a flash memory, a Hard Disk Drive (HDD) or a Solid-State Drive (SSD); or may be a combination of the above types of memories, and may provide instructions and data to the processors.

### Fifth embodiment

Based on the same inventive concept, the embodiments of the present application further provide a computer readable storage medium. The computer readable storage medium is, for example, a first memory 402 having computer programs which may be executed by the first processor 401 of the temperature control apparatus, or a second memory 502 having computer programs which may be executed by the second processor 501 of the cookware, so that the steps of the method in one or more embodiments mentioned above are implemented.

One skilled in the art should understand that, the embodiments of the present application may be provided as a method, a system, or a computer program product. Therefore, the present application may be in the form of hardware embodiments, software embodiments, or a combination thereof. Moreover, the present application may be in the form of a computer program product that is implemented on one or more computer-usable storage media (including, but not limited to, magnetic disk storage and optical storage) containing computer-usable program codes.

The present application is described referring to the flow chart and/or block diagram of the method, device (system) and computer program product according to the embodiments of the present application. It should be understood that, each flow and/or block in the flow chart and/or the block diagram and the combination of flow and/or block in the flow chart and/or the block diagram may be realized via computer program instructions. Such computer program instructions may be provided to a processor of a general-purpose computer, a special-purpose computer, a built-in processor or other programmable data processing devices, to produce a machine, so that the instructions executed by the processor of the computer or other programmable data processing devices may produce a device for realizing the functions specified in one or more flows in the flow chart and/or one or more blocks in the block diagram.

Such computer program instructions may also be stored in a computer-readable storage that can guide a computer or other programmable data processing devices to work in a specific mode, so that the instructions stored in the computer-readable storage may produce a manufacture including a command device. The command device may realize the functions specified in one or more flows of the flow chart and one or more blocks in the block diagram.

Such computer program instructions may also be loaded to a computer or other programmable data processing devices, so that a series of operational processes may be executed on the computer or other programmable devices to produce a computer-realized processing, so that the instructions executed on the computer or other programmable devices may provide steps for realizing the functions specified in one or more flows in the flow chart and/or one or more blocks in the block diagram.

The above embodiments are only preferred embodiments of the present application and are not intended to limit the protection scope of the present application.

## Claims

1. A temperature control method for a cookware (50), the cookware (50) comprising a first heating device (503) and a plurality of temperature sensors (203) arranged at different positions of a first heating area, the method comprising:
(101) collecting temperature values detected by the plurality of temperature sensors (203);
(102) determining a minimum temperature value and a maximum temperature value of the first heating area from all the collected temperature values;
(103) starting the first heating device (503) if the minimum temperature value and the maximum temperature value of the first heating area satisfy a preset temperature increase condition; and
(104) stopping the first heating device (503) if the minimum temperature value and the maximum temperature value of the first heating area satisfy a preset temperature reduction condition,
**characterized in that**
the cookware (50) further comprises: a second heating device (503) to an N^{th} heating device (202), and a plurality of temperature sensors (203) arranged at different positions of an i^{th} heating area; wherein the i^{th} heating area corresponds to an i^{th} heating device (202), in which i is an integer from 2 to N; the method further comprises:
collecting temperature values detected by the plurality of temperature sensors (203) in the i^{th} heating area;
determining a minimum temperature value and a maximum temperature value of the i^{th} heating area from all the collected temperature values;
starting the i^{th} heating device (202) if the minimum temperature value and the maximum temperature value of the i^{th} heating area satisfy the preset temperature increase condition; and
stopping the i^{th} heating device (202) if the minimum temperature value and the maximum temperature value of the i^{th} heating area satisfy the preset temperature reduction condition, wherein the starting and stopping of the plurality of heating devices is controlled independently,
wherein the temperature increase condition comprises: the minimum temperature value being less than a lowest temperature threshold value, and the maximum temperature value being less than a highest temperature threshold value,
wherein the temperature reduction condition comprises: the minimum temperature value being greater than or equal to a lowest temperature threshold value, or the maximum temperature value being greater than or equal to a highest temperature threshold value, and wherein the method further comprises:
presetting the lowest temperature threshold value and the highest temperature threshold value corresponding to each operating mode of each heating area; and
determining the lowest temperature threshold value and the highest temperature threshold value of each heating area in a current operating mode.

2. The method of claim 1, wherein the method further comprises:
presetting the lowest temperature threshold value and the highest temperature threshold value corresponding to each working mode of the cookware (50); and
determining the lowest temperature threshold value and the highest temperature threshold value of the cookware (50) in a current operating mode.

3. The method of any one of claims 1 to 2, wherein a distribution of the plurality of temperature sensors (203) is a radial distribution or a dot matrix distribution.

4. A temperature control apparatus for a cookware, the cookware comprising a first heating device (503) and a plurality of temperature sensors (203) arranged at different positions of a first heating area; the temperature control apparatus comprising: a first processor (401) and a first memory (402); wherein
the first processor (401) is configured to execute a temperature control program stored in the first memory to implement the method according to any one of claims 1 to 3.

5. A cookware (50) comprising a second processor (501), a second memory (502), a first heating device (503), and a plurality of temperature sensors (203) arranged at different positions of a first heating area; wherein
the second processor (501) is configured to execute temperature control programs stored in the second memory (502) to implement the method according to any one of claims 1 to 3.

6. A computer readable storage medium having computer programs stored thereon, wherein steps of the method of any one of claims 1 to 3 are implemented when the computer programs are executed by a processor.

## Patentansprüche

1. Temperatursteuerverfahren für ein Kochgeschirr (50), wobei das Kochgeschirr (50) eine erste Heizvorrichtung (503) und eine Vielzahl von Temperatursensoren (203) umfasst, die an verschiedenen Positionen eines ersten Heizbereichs angeordnet sind, wobei das Verfahren Folgendes umfasst:
(101), Sammeln der von der Vielzahl der Temperatursensoren (203) erfassten Temperaturwerte;
(102) Bestimmen eines minimalen Temperaturwerts und eines maximalen Temperaturwerts des ersten Heizbereichs aus allen gesammelten Temperaturwerten;
(103) Starten der ersten Heizvorrichtung (503), wenn der minimale Temperaturwert und der maximale Temperaturwert des ersten Heizbereichs eine voreingestellte Temperaturerhöhungsbedingung erfüllen; und
(104) Stoppen der ersten Heizvorrichtung (503), wenn der minimale Temperaturwert und der maximale Temperaturwert des ersten Heizbereichs eine voreingestellte Temperaturabsenkungsbedingung erfüllen,
**dadurch gekennzeichnet, dass**
das Kochgeschirr (50) ferner Folgendes umfasst: eine zweite Heizvorrichtung (503) zu einer N-ten Heizvorrichtung (202), und eine Vielzahl von Temperatursensoren (203), die an verschiedenen Positionen eines i-ten Heizbereichs angeordnet sind; wobei der i-te Heizbereich einer i-ten Heizvorrichtung (202) entspricht, wobei i eine ganze Zahl von 2 bis N ist; das Verfahren ferner umfasst:
Sammeln von Temperaturwerten, die von der Vielzahl von Temperatursensoren (203) im i-ten Heizbereich erfasst wurden;
Bestimmen eines minimalen Temperaturwertes und eines maximalen Temperaturwertes des i-ten Heizbereichs aus allen gesammelten Temperaturwerten;
Starten der i-ten Heizvorrichtung (202), wenn der minimale Temperaturwert und der maximale Temperaturwert des i-ten Heizbereichs die voreingestellte Temperaturerhöhungsbedingung erfüllen; und
Stoppen der i-ten Heizvorrichtung (202), wenn der minimale Temperaturwert und der maximale Temperaturwert des i-ten Heizbereichs die voreingestellte Temperaturabsenkungsbedingung erfüllen, wobei das Starten und Stoppen der Vielzahl von Heizvorrichtungen unabhängig gesteuert wird,
wobei die Temperaturerhöhungsbedingung Folgendes umfasst: der minimale Temperaturwert ist kleiner als ein niedrigster Temperaturschwellenwert, und der maximale Temperaturwert ist kleiner als ein höchster Temperaturschwellenwert,
wobei die Temperaturabsenkungsbedingung Folgendes umfasst: der minimale Temperaturwert ist größer als oder gleich einem niedrigsten Temperaturschwellenwert, oder der maximale Temperaturwert, ist größer als oder gleich einem höchsten Temperaturschwellenwert, und
wobei das Verfahren ferner umfasst:
Voreinstellen des niedrigsten Temperaturschwellenwerts und des höchsten Temperaturschwellenwerts entsprechend jedem Betriebsmodus jedes Heizbereichs; und
Bestimmen des niedrigsten Temperaturschwellenwerts und des höchsten Temperaturschwellenwerts jedes Heizbereichs in einem aktuellen Betriebsmodus.

2. Verfahren gemäß Anspruch 1, wobei das Verfahren ferner Folgendes umfasst:
Voreinstellen des niedrigsten Temperaturschwellenwerts und des höchsten Temperaturschwellenwerts entsprechend jedem Arbeitsmodus des Kochgeschirrs (50); und
Bestimmen des niedrigsten Temperaturschwellenwerts und des höchsten Temperaturschwellenwerts des Kochgeschirrs (50) in einem aktuellen Betriebsmodus.

3. Verfahren gemäß einem der Ansprüche 1 bis 2, wobei eine Verteilung der Vielzahl von Temperatursensoren (203) eine Radialverteilung oder eine Punktmatrixverteilung ist.

4. Temperatursteuervorrichtung für ein Kochgeschirr, wobei das Kochgeschirr eine erste Heizvorrichtung (503) und eine Vielzahl von Temperatursensoren (203) umfasst, die an verschiedenen Positionen eines ersten Heizbereichs angeordnet sind; wobei die Temperatursteuervorrichtung Folgendes umfasst: einen ersten Prozessor (401) und einen ersten Speicher (402); wobei
der erste Prozessor (401) so konfiguriert ist, dass er ein im ersten Speicher gespeichertes Temperatursteuerprogramm ausführt, um das Verfahren gemäß einem der Ansprüche 1 bis 3 zu implementieren.

5. Kochgeschirr (50) umfassend einen zweiten Prozessor (501), einen zweiten Speicher (502), eine erste Heizvorrichtung (503) und eine Vielzahl von Temperatursensoren (203), die an verschiedenen Positionen eines ersten Heizbereichs angeordnet sind; wobei
der zweite Prozessor (501) so konfiguriert ist, dass er im zweiten Speicher (502) gespeicherte Temperatursteuerprogramme ausführt, um das Verfahren gemäß einem der Ansprüche 1 bis 3 zu implementieren.

6. Computerlesbares Speichermedium aufweisend darauf gespeicherte Computerprogramme, wobei Schritte des Verfahrens gemäß einem der Ansprüche 1 bis 3 implementiert werden, wenn die Computerprogramme von einem Prozessor ausgeführt werden.

## Revendications

1. Méthode de contrôle de température pour un ustensile de cuisson (50), l'ustensile de cuisson (50) comprenant un premier dispositif de chauffage (503) et une pluralité de capteurs de température (203) disposés à différentes positions d'une première zone de chauffage, la méthode comprenant :
(101) collecter des valeurs de température détectées par la pluralité de capteurs de température (203) ;
(102) déterminer une valeur de température minimale et une valeur de température maximale de la première zone de chauffage à partir de toutes les valeurs de température collectées ;
(103) démarrer le premier dispositif de chauffage (503) si la valeur de température minimale et la valeur de température maximale de la première zone de chauffage satisfont à une condition d'augmentation de température prédéfinie ; et
(104) arrêter le premier dispositif de chauffage (503) si la valeur de température minimale et la valeur de température maximale de la première zone de chauffage satisfont à une condition de réduction de température prédéfinie,
**caractérisé en ce que**
l'ustensile de cuisson (50) comprend en outre: un deuxième dispositif de chauffage (503) à un N-ième dispositif de chauffage (202), et une pluralité de capteurs de température (203) disposés à différentes positions d'une i-ième zone de chauffage; dans laquelle la i-ième zone de chauffage correspond à un i-ième dispositif de chauffage (202), dans lequel i est un nombre entier de 2 à N ; la méthode comprend en outre :
collecter les valeurs de température détectées par la pluralité de capteurs de température (203) dans la i-ième zone de chauffage ;
déterminer une valeur de température minimale et une valeur de température maximale de la i-ième zone de chauffage à partir de toutes les valeurs de température collectées ;
démarrer le i-ième dispositif de chauffage (202) si la valeur de température minimale et la valeur de température maximale de la i-ième zone de chauffage satisfont à la condition d'augmentation de température prédéfinie ; et
arrêter le i-ième dispositif de chauffage (202) si la valeur de température minimale et la valeur de température maximale de la i-ième zone de chauffage satisfont à la condition de réduction de température prédéfinie, le démarrage et l'arrêt de la pluralité de dispositifs de chauffage étant commandés indépendamment,
la condition d'augmentation de la température est la suivante : la valeur de la température minimale est inférieure à la valeur seuil de la température la plus basse, et la valeur de la température maximale est inférieure à la valeur seuil de la température la plus élevée,
dans laquelle la condition de réduction de la température comprend: la valeur de température minimale étant supérieure ou égale à une valeur de seuil de température la plus basse, ou la valeur de température maximale étant supérieure ou égale à une valeur de seuil de température la plus élevée, et
dans lequel la méthode comprend en outre :
la prédéfinition de la valeur seuil de température la plus basse et de la valeur seuil de température la plus élevée correspondant à chaque mode de fonctionnement de chaque zone de chauffage ; et
déterminer la valeur seuil de température la plus basse et la valeur seuil de température la plus élevée de chaque zone de chauffage dans un mode de fonctionnement courant.

2. La méthode de la revendication 1, dans laquelle la méthode comprend en outre:
prérégler la valeur seuil de température la plus basse et la valeur seuil de température la plus élevée correspondant à chaque mode de fonctionnement de l'ustensile de cuisson (50) ; et
déterminer la valeur seuil de la température la plus basse et la valeur seuil de la température la plus élevée de l'ustensile de cuisson (50) dans un mode de fonctionnement courant.

3. La méthode de l'une des revendications 1 à 2, dans laquelle la distribution de la pluralité de capteurs de température (203) est une distribution radiale ou une distribution matricielle.

4. Appareil de contrôle de température pour un ustensile de cuisson, l'ustensile de cuisson comprenant un premier dispositif de chauffage (503) et une pluralité de capteurs de température (203) disposés à différentes positions d'une première zone de chauffage ; l'appareil de contrôle de température comprend : un premier processeur (401) et une première mémoire (402) ; dans lequel
le premier processeur (401) est configuré pour exécuter un programme de contrôle de la température stocké dans la première mémoire afin de mettre en oeuvre la méthode selon l'une des revendications 1 à 3.

5. Ustensile de cuisson (50) comprenant un second processeur (501), une seconde mémoire (502), un premier dispositif de chauffage (503) et une pluralité de capteurs de température (203) disposés à différentes positions d'une première zone de chauffage ; dans lequel
le second processeur (501) est configuré pour exécuter des programmes de contrôle de la température stockés dans la seconde mémoire (502) afin de mettre en oeuvre la méthode selon l'une des revendications 1 à 3.

6. Support de stockage lisible par ordinateur sur lequel sont stockés des programmes d'ordinateur, dans lequel les étapes de la méthode de l'une des revendications 1 à 3 sont mises en oeuvre lorsque les programmes d'ordinateur sont exécutés par un processeur.
